# FASCICULE DE BREVET EUROPEEN

(11) **EP 3 319 149 B1**
(45) Date de publication et mention de la délivrance du brevet: **19.02.2020**
(21) Numéro de dépôt: 17196831.6
(22) Date de dépôt: 17.10.2017
(51) Int. Cl.: H01M 2/10, H01M 10/6557, H01M 10/6567

(54) **BATTERIE À MODULES DE CELLULE(S) ÉLECTROCHIMIQUE(S) SÉPARÉS PAR DES PLAQUES D'ÉCHANGE THERMIQUE EXTERNES, ET SYSTÈME ASSOCIÉ**
BATTERIE, DESSEN ELEKTROCHEMISCHE ZELLMODULE DURCH EXTERNE WÄRMETAUSCHERPLATTEN GETRENNT WERDEN, UND DAS VERBUNDENE SYSTEM
BATTERY WHOSE ELECTROCHEMICAL CELL MODULES ARE SEPARATED BY EXTERNAL THERMAL EXCHANGE PLATES, AND ASSOCIATED SYSTEM

(30) Priorité: 07.11.2016 FR 1660742
(43) Date de publication de la demande: 09.05.2018
(73) Titulaire: PSA Automobiles SA, 78300 Poissy (FR)
(72) Inventeur: CIESIELSKI, Olivier, 78420 CARRIERES SUR SEINE (FR); MUSEMENT, Eric, 78990 ELANCOURT (FR); FERIOT, Bertrand, 91430 VAUHALLAN (FR)
(74) Mandataire: Fernandez, Francis Lionel

(56) Documents cités:
- DE-A1-102014 214 320
- US-A1- 2012 177 970

## Description

L'invention concerne les batteries qui comprennent des modules de cellule(s) électrochimiques.

Certains systèmes, comme par exemple des véhicules, éventuellement de type automobile, comprennent au moins une batterie comportant un boîtier contenant au moins deux modules comportant chacun au moins une cellule électrochimique de stockage d'énergie électrique. Chaque cellule électrochimique peut, par exemple, être de type lithium-ion (ou Li-ion) ou Ni-Mh ou Ni-Cd ou encore plomb.

Comme le sait l'homme de l'art, ces cellules électrochimiques ont besoin de faire l'objet d'un contrôle quasi permanent pour que leur durée de vie puisse être optimisée. Ce contrôle porte non seulement sur les tensions aux bornes des différentes cellules, mais également sur les températures de ces différentes cellules.

Afin de permettre le contrôle de la température de ces cellules, et plus précisément le maintien de leur température dans une plage prédéfinie, elles sont installées à l'intérieur d'un boîtier qui fait l'objet d'une régulation thermique par échange de calories.

L'échange de calories induisant l'encombrement le moins important se fait par conduction, et plus précisément au moyen de plaque(s) d'échange qui comprennent chacune un circuit d'échange dans lequel circule un fluide caloporteur issu d'un autre circuit d'échange situé à l'extérieur du boîtier. On comprendra que ce fluide caloporteur sert soit à capturer des calories produites par les cellules lorsqu'elles doivent être refroidies, soit à céder des calories aux cellules lorsqu'elles doivent être réchauffées.

Actuellement, ces plaques d'échange thermique sont soit placées sous les modules de cellules, comme décrit dans le document brevet EP 2016/0087319, soit intercalées entre des modules de cellules voisins, comme décrit dans les documents brevet EP 1990849, US 2015/0303537 et EP 2337143. Dans tous les cas, chaque plaque d'échange thermique est logée à l'intérieur du boîtier, et donc en cas de fuite de son circuit d'échange le fluide caloporteur se déverse à l'intérieur du boîtier, ce qui peut induire un court-circuit ou un feu du fait de la présence de composants électriques.

On connait en outre des documents de brevet US-2012177970-A1 et DE-102014214320-A1, une batterie conforme au préambule de la revendication 1.

L'invention a donc notamment pour but d'améliorer la situation.

Elle propose notamment à cet effet une batterie comprenant un boîtier délimitant un espace interne contenant au moins deux modules comportant chacun au moins une cellule électrochimique (de stockage d'énergie électrique). Ce boîtier comprend au moins un réceptacle logeant au moins une plaque d'échange thermique comprenant un premier circuit d'échange dans lequel est propre à circuler un fluide caloporteur pour échanger des calories avec l'espace interne.

Cette batterie se caractérise par le fait que ce réceptacle :
- est une pièce insérée et rapportée dans l'espace interne entre deux modules, cette pièce traversant un orifice défini dans une paroi inférieure ou latérale dudit boîtier, et
- ne communique qu'avec l'extérieur du boîtier afin d'empêcher une entrée de fluide caloporteur dans l'espace interne en cas de fuite du premier circuit d'échange.

Chaque premier circuit d'échange étant désormais logé dans un réceptacle qui ne communique qu'avec l'extérieur du boîtier, on est certain qu'en cas de fuite il n'y aura pas de risque de court-circuit ou de feu dans la batterie.

La batterie selon l'invention peut comporter d'autres caractéristiques qui peuvent être prises séparément ou en combinaison, et notamment :
- hors invention, au moins un réceptacle peut être une sous-partie conformée d'une paroi inférieure ou latérale du boîtier ;
- la paroi inférieure peut faire partie d'une sous-partie inférieure du boîtier, qui est propre à être couplée à une sous-partie supérieure du boîtier, et délimite une face inférieure de l'espace interne ;
- la paroi latérale peut faire partie d'une sous-partie supérieure du boîtier qui est propre à être couplée à une sous-partie inférieure du boîtier, et délimite une partie d'une face latérale de l'espace interne ;
- au moins un réceptacle peut être au contact d'au moins deux modules ;
- chaque plaque d'échange thermique peut, par exemple, être réalisée en aluminium ;
- chaque réceptacle peut, par exemple, être réalisé en aluminium.

L'invention propose également un système comprenant un second circuit d'échange dans lequel circule un fluide caloporteur et auquel est couplée au moins une batterie du type de celle présentée ci-avant.

Un tel système peut, par exemple, constituer un véhicule, éventuellement de type automobile.

D'autres caractéristiques et avantages de l'invention apparaîtront à l'examen de la description détaillée ci-après, et des dessins annexés (obtenus en CAO/DAO (« Conception Assistée par Ordinateur/Dessin Assisté par Ordinateur »), d'où le caractère apparemment discontinu de certaines lignes), sur lesquels:
- la figure 1 illustre schématiquement, dans une vue en perspective, un exemple de réalisation d'une batterie selon l'invention,
- la figure 2 illustre schématiquement, dans une vue du dessous, la paroi inférieure de la sous-partie inférieure du boîtier de la batterie de la figure 1,
- la figure 3 illustre schématiquement la batterie de la figure 1, dans une vue en coupe selon l'axe III-III de la figure 2,
- la figure 4 illustre schématiquement la batterie de la figure 1, dans une vue en coupe selon l'axe IV-IV de la figure 2, et
- la figure 5 illustre schématiquement, dans une vue en perspective, un exemple de réalisation d'une plaque d'échange thermique d'une batterie selon l'invention.

L'invention a notamment pour but de proposer une batterie BA destinée à équiper un système et comprenant un boîtier BT à refroidissement par fluide caloporteur et délimitant un espace interne EI contenant au moins deux modules MC comportant chacun au moins une cellule électrochimique de stockage d'énergie électrique.

On notera que l'on entend ici par cellule électrochimique un élément de stockage d'énergie électrique.

Dans ce qui suit, on considère à titre d'exemple non limitatif, que la batterie BA fait partie d'un système constituant un véhicule, éventuellement de type automobile. Par exemple, ce véhicule est de type hybride ou tout électrique. Mais l'invention n'est pas limitée à ce type de système. Elle concerne en effet tout système comprenant au moins une batterie à modules de cellule(s) électrochimique(s). Ainsi, le système pourra être un véhicule, quel qu'en soit le type (terrestre, maritime (ou fluvial), ou aérien), ou un appareil, éventuellement domestique, ou une installation, éventuellement de type industriel, ou encore un bâtiment.

Par ailleurs, on considère dans ce qui suit, à titre d'exemple non limitatif, que les cellules électrochimiques de la batterie BA sont de type lithium-ion (ou Li-ion). Mais l'invention n'est pas limitée à ce type de cellule électrochimique. Elle concerne en effet tout type de cellule électrochimique capable de stocker de l'énergie électrique en vue de la restituer. Ainsi, les cellules pourront, par exemple, être également de type Ni-Mh ou Ni-Cd ou encore plomb.

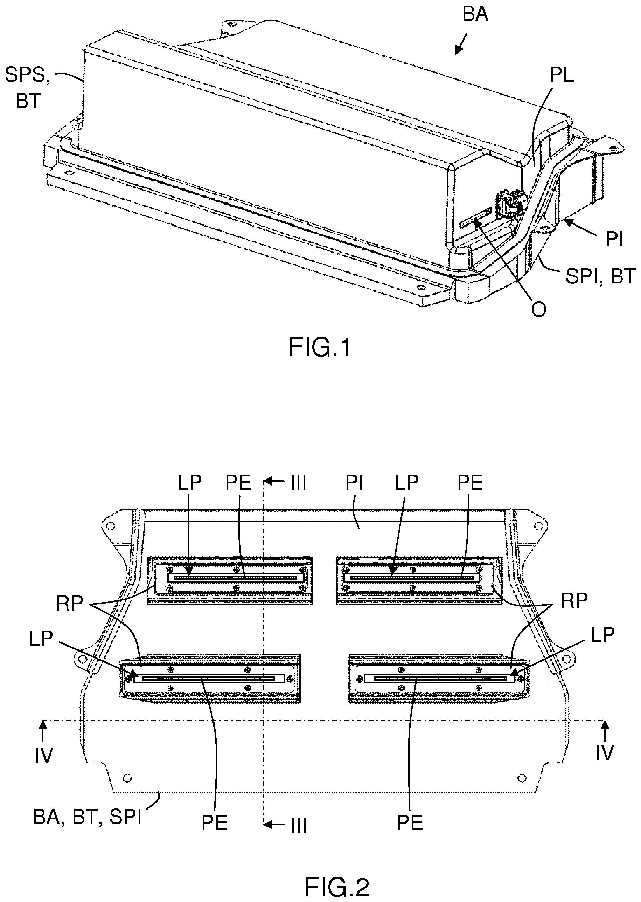

On a schématiquement illustré sur les figures 1 à 4, un exemple de réalisation non limitatif d'une batterie BA selon l'invention.

Comme illustré, une batterie BA, selon l'invention, comprend un boîtier BT, au moins une plaque d'échange thermique PE, et au moins deux modules MC comportant chacun au moins une cellule électrochimique (de stockage d'énergie électrique).

Le boîtier BT délimite un espace interne EI qui contient les modules MC de cellule(s) électrochimique(s). Par exemple, et comme illustré non limitativement sur les figures 1 à 4 le boîtier BT peut comprendre une sous-partie inférieure SPI, et une sous-partie supérieure SPS placée au-dessus de cette sous-partie inférieure SPI et couplée à cette dernière (SPI), par exemple par vissage.

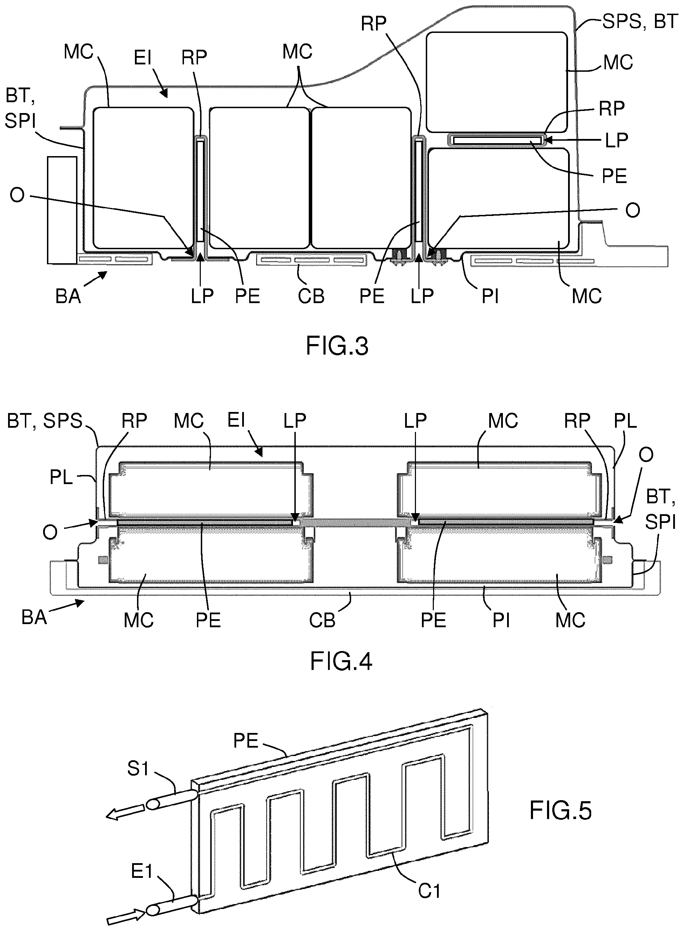

Par exemple, et comme illustré non limitativement sur les figures 3 et 4, la sous-partie inférieure SPI peut être éventuellement installée et solidarisée à un châssis CB, ici propre à être solidarisé au véhicule.

De plus, et comme cela apparaît mieux sur les figures 2 à 4, ce boîtier BT comprend au moins un réceptacle RP inséré dans son espace interne EI entre deux modules MC.

On notera que dans l'exemple illustré non limitativement sur les figures 2 à 4 le boîtier BT comprend dix modules MC et six réceptacles RP. Trois modules MC sont placés dans une position verticale les uns derrière les autres dans une première rangée et trois autres modules MC sont placés dans la position verticale les uns derrière les autres dans une seconde rangée parallèle à la première (voir figure 3). Deux modules MC sont placés en bout de la première rangée dans une position horizontale en étant superposés l'un sur l'autre, et deux autres modules MC sont placés en bout de la seconde rangée dans une position horizontale en étant superposés l'un sur l'autre (voir figures 3 et 4). Un premier réceptacle RP est inséré entre les premier et deuxième modules MC verticaux de la première rangée, un deuxième réceptacle RP est inséré entre les premier et deuxième modules MC verticaux de la seconde rangée, un troisième réceptacle RP est inséré entre le troisième module MC vertical de la première rangée et le module MC horizontal du bas de la première rangée, un quatrième réceptacle RP est inséré entre le troisième module MC vertical de la seconde rangée et le module MC horizontal du bas de la seconde rangée, un cinquième réceptacle RP est inséré entre les deux modules MC horizontaux superposés dans la première rangée, et un sixième réceptacle RP est inséré entre les deux modules MC horizontaux superposés dans la seconde rangée.

Mais le boîtier BT pourrait ne comprendre que deux modules MC et un seul réceptacle RP. Ce qui est important c'est en effet qu'il comprenne au moins deux modules MC et au moins un réceptacle RP inséré entre ces deux modules MC.

Chaque réceptacle RP comprend au moins un logement LP qui loge au moins une plaque d'échange thermique PE comprenant un premier circuit d'échange C1 dans lequel est propre à circuler un fluide caloporteur pour échanger des calories avec cet espace interne EI.

On notera que ce fluide caloporteur peut, par exemple, être issu d'un second circuit d'échange qui est situé à l'extérieur de l'espace interne EI et auquel est connecté le premier circuit d'échange C1. Mais ce dernier (C1) pourrait comprendre une partie située à l'extérieur de la batterie BA et propre à échanger des calories avec l'extérieur. Dans le cas d'un véhicule, ce second circuit d'échange peut, par exemple, être une partie du circuit de régulation thermique (chauffage/ refroidissement) d'un moteur thermique ou d'une façade de refroidissement.

Le fluide caloporteur qui circule dans le premier circuit d'échange C1 et l'éventuel second circuit d'échange est, par exemple, un liquide. Ainsi, il peut s'agir d'eau, éventuellement mélangée à un additif, ou d'une huile ou encore de sodium liquide.

On notera que dans l'exemple illustré non limitativement sur les figures 2 à 4 les six réceptacles RP logent chacun une unique plaque d'échange thermique PE. Mais l'un au moins des réceptacles RP pourrait loger au moins deux plaques d'échange thermique PE.

Comme illustré partiellement sur la figure 5, le premier circuit d'échange C1 de chaque plaque d'échange thermique PE comprend une entrée E1 et une sortie S1 destinées à être connectées (directement ou indirectement) au second circuit d'échange en deux endroits, éventuellement distants. De préférence, chaque premier circuit d'échange C1 est défini à l'intérieur de sa plaque d'échange thermique PE, afin que le transfert de calories soit sensiblement le même des deux côtés de cette plaque d'échange thermique PE, qui sont situés parallèlement aux deux modules MC entre lesquels son réceptacle RP est inséré.

Chaque réceptacle RP ne communique qu'avec l'extérieur du boîtier BT afin d'empêcher une entrée du fluide caloporteur dans l'espace interne EI en cas de fuite d'un premier circuit d'échange C1 qu'il loge. En d'autres termes, chaque réceptacle RP isole totalement chaque plaque d'échange thermique PE, qui est logée dans son logement LP, vis-à-vis de l'espace interne EI, si bien que cette plaque d'échange thermique PE est fonctionnellement placée à l'extérieur de l'espace interne EI tout en étant placée entre deux modules MC pour échanger des calories avec ces derniers (MC). Par conséquent, en cas de fuite d'un premier circuit d'échange C1 le fluide caloporteur qui circule dans ce dernier (C1) est avantageusement évacué à l'extérieur du boîtier BT sans qu'il y ait le moindre risque de court-circuit ou de feu à l'intérieur de la batterie BT.

On notera qu'au moins l'un des réceptacles RP peut être une pièce rapportée qui traverse un orifice O défini dans une paroi inférieure PI ou latérale PL du boîtier BT. C'est notamment le cas des six réceptacles RP dans l'exemple illustré non limitativement sur les figures 2 à 4. Dans ce cas, chaque réceptacle RP est solidarisé fixement à la paroi inférieure PI ou latérale PL du boîtier BT, par exemple par vissage, de préférence avec interposition d'un joint, éventuellement plat, comme par exemple un joint de pare-brise, ou de deux joints toriques assurant une double barrière d'étanchéité.

Mais en variante hors invention, ou en complément, l'un au moins des réceptacles RP pourrait être une sous-partie conformée d'une paroi inférieure PI ou latérale PL du boîtier BT.

En d'autres termes, le boîtier BT peut comporter soit des réceptacles RP qui sont tous des pièces rapportées sur l'une au moins de ses parois, soit hors invention des réceptacles RP qui font tous partie intégrante de l'une de ses parois, soit encore au moins un réceptacle RP rapporté sur l'une de ses parois et au moins un réceptacle RP faisant partie intégrante de l'une de ses parois.

Chaque réceptacle RP ne communique qu'avec l'extérieur du boîtier BT du fait qu'il comprend, de préférence, au moins une ouverture communiquant directement avec l'extérieur. Mais dans une variante non préférentielle cette communication avec l'extérieur pourrait se faire via au moins un conduit ou tuyau communiquant avec l'extérieur.

Dans l'exemple illustré non limitativement sur les figures 2 à 4, la paroi inférieure PI fait partie de la sous-partie inférieure SPI du boîtier BT et délimite la face inférieure de l'espace interne EI, et la paroi latérale PL fait partie de la sous-partie supérieure SPS du boîtier BT et délimite une partie d'une face latérale de l'espace interne EI. Les premier, deuxième, troisième et quatrième réceptacles RP sont des pièces rapportées qui traversent respectivement quatre ouvertures O définies dans la paroi inférieure PI de la sous-partie inférieure SPI du boîtier BT, et les cinquième et sixième réceptacles RP sont également des pièces rapportées qui traversent respectivement deux ouvertures O définies dans deux parois latérales PL opposées de la sous-partie supérieure SPI du boîtier BT.

Afin d'optimiser l'échange de calories par conduction, il est avantageux qu'au moins un réceptacle RP soit inséré étroitement entre au moins deux modules MC afin de les contacter. Il est également avantageux, pour la même raison, que chaque module MC soit logé étroitement contre les parois qui délimitent le logement LP de son réceptacle RP. On comprendra que cela facilite en effet le transfert de calories par conduction entre un module MC et le fluide caloporteur du premier circuit d'échange C1 associé, via la plaque d'échange thermique PE et une paroi du réceptacle RP.

Egalement pour optimiser l'échange de calories par conduction il est avantageux que chaque plaque d'échange thermique PE présente une forte conductivité thermique. Ainsi, chaque plaque d'échange thermique PE peut, par exemple, être réalisée en aluminium (matériau qui présente l'avantage d'être léger comparé au cuivre dont la conductivité thermique est certes légèrement supérieure à la sienne mais qui est plus lourd). Il est également avantageux, pour la même raison, que chaque réceptacle RP présente une forte conductivité thermique. Ainsi, chaque réceptacle RP peut, par exemple, être réalisé en aluminium.

## Revendications

1. Batterie (BA) comprenant un boîtier (BT) délimitant un espace interne (EI) contenant au moins deux modules (MC) comportant chacun au moins une cellule électrochimique, ledit boîtier (BT) comprenant au moins un récéptacle (RP) logeant au moins une plaque d'échange thermique (PE) comprenant un premier circuit d'échange (C1) dans lequel est propre à circuler un fluide caloporteur pour échanger des calories avec ledit espace interne (EI), **caractérisée en ce que** le réceptacle (RP) :
- est une pièce insérée et rapportée dans ledit espace interne (EI) entre deux modules (MC), cette pièce traversant un orifice (O) défini dans une paroi inférieure (PI) ou latérale (PL) dudit boîtier (BT), et
- ne communique qu'avec l'extérieur dudit boîtier (BT) afin d'empêcher une entrée dudit fluide caloporteur dans ledit espace interne (EI) en cas de fuite dudit premier circuit d'échange (C1).

2. Batterie selon la revendication 1, **caractérisée en ce que** ladite paroi inférieure (PI) fait partie d'une sous-partie inférieure (SPI) dudit boîtier (BT) propre à être couplée à une sous-partie supérieure (SPS) dudit boîtier (BT), et délimite une face inférieure dudit espace interne (EI).

3. Batterie selon l'une des revendications précédentes, **caractérisée en ce que** ladite paroi latérale (PL) fait partie d'une sous-partie supérieure (SPS) dudit boîtier (BT) propre à être couplée à une sous-partie inférieure (SPI) dudit boîtier (BT), et délimite une partie d'une face latérale dudit espace interne (EI).

4. Batterie selon l'une des revendications 1 à 3, **caractérisée en ce qu'**au moins un réceptacle (RP) est au contact d'au moins deux modules (MC).

5. Batterie selon l'une des revendications 1 à 4, **caractérisée en ce que** chaque plaque d'échange thermique (PE) est réalisée en aluminium.

6. Batterie selon l'une des revendications 1 à 5, **caractérisée en ce que** chaque réceptacle (RP) est réalisé en aluminium.

7. Système comprenant un second circuit d'échange dans lequel circule un fluide caloporteur, **caractérisé en ce qu'**il comprend en outre au moins une batterie (BA) selon l'une des revendications précédentes, couplée audit second circuit d'échange.

8. Système selon la revendication 7, **caractérisé en ce qu'**il constitue un véhicule.

## Patentansprüche

1. Batterie (BA), die ein Gehäuse (BT) umfasst, das einen Innenraum (EI) abgrenzt, der mindestens zwei Module (MC) enthält, die jeweils mindestens eine elektrochemische Zelle umfassen, wobei das Gehäuse (BT) mindestens eine Aufnahme (RP) umfasst, die mindestens eine Wärmeaustauschplatte (PE) unterbringt, die einen ersten Austauschkreislauf (C1) umfasst, in dem eine Wärmeträgerflüssigkeit zirkulieren kann, um Kalorien mit dem Innenraum (EI) auszutauschen, **dadurch gekennzeichnet, dass** die Aufnahme (RP):
- ein Teil ist, das in den Innenraum (EI) zwischen zwei Modulen (MC) eingefügt und angebaut ist, wobei dieses Teil eine Öffnung (0) durchquert, die in einer unteren Wand (PI) oder Seitenwand (PL) des Gehäuses (BT) definiert ist, und
- mit der Außenseite des Gehäuses (BT) nur in Kommunikation steht, um ein Eintreten der Wärmeträgerflüssigkeit in den Innenraum (EI) in dem Fall eines Lecks des ersten Austauschkreislaufs (C1) zu verhindern.

2. Batterie nach Anspruch 1, **dadurch gekennzeichnet, dass** die Innenwand (PI) Teil eines unteren Subteils (SPI) des Gehäuses (BT) ist, der geeignet ist, um mit einem oberen Subteil (SPS) des Gehäuses (BT) gekoppelt zu sein und eine untere Fläche des Innenraums (EI) abgrenzt.

3. Batterie nach einem der vorstehenden Ansprüche, **dadurch gekennzeichnet, dass** die Seitenwand (PL) Teil eines oberen Subteils (SPS) des Gehäuses (BT) ist, der geeignet ist, mit einem unteren Subteil (SPI) des Gehäuses (BT) gekoppelt zu sein und einen Teil einer Seitenfläche des Innenraums (EI) abgrenzt.

4. Batterie nach einem der Ansprüche 1 bis 3, **dadurch gekennzeichnet, dass** mindestens eine Aufnahme (RP) mit mindestens zwei Modulen (MC) in Kontakt ist.

5. Batterie nach einem der Ansprüche 1 bis 4, **dadurch gekennzeichnet, dass** jede Wärmeaustauschplatte (PE) aus Aluminium hergestellt ist.

6. Batterie nach einem der Ansprüche 1 bis 5, **dadurch gekennzeichnet, dass** jede Aufnahme (RP) aus Aluminium hergestellt ist.

7. System, das einen zweiten Austauschkreislauf umfasst, in dem eine Wärmeträgerflüssigkeit zirkuliert, **dadurch gekennzeichnet, dass** es außerdem mindestens eine Batterie (BA) nach einem der vorstehenden Ansprüche, die an dem zweiten Austauschkreislauf gekoppelt ist, umfasst.

8. System nach Anspruch 7, **dadurch gekennzeichnet, dass** es ein Fahrzeug bildet.

## Claims

1. A battery (BA) including a casing (BT) delimiting an internal space (EI) containing at least two modules (MC) each comprising at least one electrochemical cell, said casing (BT) including at least one receptacle (RP) housing at least one thermal exchange plate (PE) including a first exchange circuit (C1) in which it is suitable to circulate a coolant for exchanging calories with said internal space (EI), **characterized in that** the receptacle (RP):
- is a piece inserted and added in said internal space (EI) between two modules (MC), this piece passing through an opening (0) defined in a lower (PI) or lateral (PL) wall of said casing (BT), and
- only communicates with the exterior of said casing (BT) so as to prevent an entry of said coolant in said internal space (EI) in the case of leakage of said first exchange circuit (C1).

2. The battery according to Claim 1, **characterized in that** said lower wall (PI) forms part of a lower subsection (SP1) of said casing (BT) suitable to be coupled to an upper subsection (SPS) of said casing (BT), and delimits a lower face of said internal space (EI).

3. The battery according to one of the preceding claims, **characterized in that** said lateral wall (PL) forms part of an upper subsection (SPS) of said casing (BT) suitable to be coupled to a lower subsection (SPI) of said casing (BT), and delimits a portion of a lateral face of said internal space (EI).

4. The battery according to one of Claims 1 to 3, **characterized in that** at least one receptacle (RP) is in contact with at least two modules (MC).

5. The battery according to one of Claims 1 to 4, **characterized in that** each thermal exchange plate (PE) is made from aluminium.

6. The battery according to one of Claims 1 to 5, **characterized in that** each receptacle (RP) is made from aluminium.

7. A system including a second exchange circuit in which a coolant circulates, **characterized in that** it includes furthermore at least one battery (BA) according to one of the preceding claims, coupled to said second exchange circuit.

8. The system according to Claim 7, **characterized in that** it constitutes a vehicle.
